# EUROPÄISCHE PATENTSCHRIFT

(11) **EP 1 362 480 B1**
(45) Veröffentlichungstag und Bekanntmachung des Hinweises auf die Patenterteilung: **04.08.2004**
(21) Anmeldenummer: 02712758.8
(22) Anmeldetag: 08.02.2002
(51) Int. Cl.: H04N 7/14

(54) **Mobile Telekommunikationseinrichtung mit einer Kamera**
Mobile telecommunications device with a camera
Dispositif mobile de télécommuncation ayant une caméra

(30) Priorität: 12.02.2001 DE 10107345
(43) Veröffentlichungstag der Anmeldung: 19.11.2003
(73) Patentinhaber: SIEMENS AKTIENGESELLSCHAFT, 80333 München (DE)
(72) Erfinder: BETTING, Andreas, 80637 München (DE)
(86) Internationale Anmeldenummer: PCT/DE2002/000467
(87) Internationale Veröffentlichungsnummer: WO 2002/065773

(56) Entgegenhaltungen:
- EP-A- 0 385 128
- EP-A- 1 129 904
- WO-A-97/26744

## Beschreibung

Die vorliegende Erfindung betrifft die Weiterentwicklung der Einsatzmöglichkeiten von Telekommunikationseinrichtungen, insbesondere von Mobilfunkgeräten.

Der vorliegenden Erfindung lag die Erwägung zugrunde,. Telekommunikationseinrichtungen über die Sprach-/Datenkommunikation hinaus für weitere Zwecke verwendbar zu machen.
Wie beispielsweise in der Zeitschrift "Elektronik", Ausgabe 24/2000, Seite 42 in dem Artikel "Das Auge des Handys" von M. D. Linnert erwähnt, ist es bereits bekannt, eine Kamera in einem Mobilfunkgerät zu integrieren. Aus EP-A-0 385 128 ist es bekannt, ein Telekommunikations Endgerät mit einer Kamera zu versehen.

Aus WO-A-97/26744 ist es bekannt, ein Mobilfunkgerät mit einer Kamera zu versehen , deren Strahlengang mit mechanischen Mitteln schwenkbar ist .

Eine Aufgabe der vorliegenden Erfindung war es, eine möglichst einfache und kostengünstige Realisierung einer gewünschten zusätzlichen Einsatzmöglichkeit, nämlich der Integration einer Kamera, bereitzustellen.

Gelöst wird diese Aufgabe durch die Merkmale des unabhängigen Anspruchs 1. Weitere vorteilhafte Ausführungsformen sind in den abhängigen Ansprüchen enthalten.

Gemäß Anspruch 1 ist eine Telekommunikationseinrichtung, insbesondere ein Mobilfunkgerät, vorgesehen, die eine Kamera, aufweist, wobei durch wahlweise licht durchlässig Schaltbare Elemente zumindest eine erste und eine zweite verschiedene Einstrahlrichtung zur Kamera freigebbar sind. Mittels einer Optik wird ein aufzunehmender Gegenstand auf einer licht- oder strahlungsempfindlichen Schicht abgebildet, beispielsweise auf einem CMOS- Bildsensor.

Vorzugsweise wird eine Digitalkamera eingesetzt, die das Bild nicht auf Film sondern in digitaler Form speichert.

Weiterhin bevorzugt handelt es sich bei der Kamera um eine Digital-Videokamera, d. h. um ein Aufnahmegerät, bei dem die Bildaufnahmen einschließlich Begleitton aufgezeichnet werden.

Der Benutzer der erfindungsgemäßen Telekommunikationseinrichtung, insbesondere des Mobilfunkgerätes, kann die aufgenommenen Bilder auf einer Mattscheibe bzw. einem Display sehen, d. h. der aufzunehmende Gegenstand wird auf einer geeigneten Mattscheibe oder einer Anzeigevorrichtung dargestellt. Im Falle eines Mobilfunkgerätes wird dazu vorzugsweise die standardmäßig vorgesehene Anzeigevorrichtung verwendet.

Die Erfindung ermöglicht, nur ein Kameramodul einzusetzen. Dabei ist eine Bilderfassung von an verschiedenen positionen befindlichen Gegenständen ohne Schwenken der Telekommunikationseinrichtung möglich, d. h. zur optischen Abbildung können verschiedene Aufnahmerichtungen erfasst werden, bzw. verschiedene Einstrahlrichtungen sind benutzbar.

Um einen komplexen Schwenkmechanismus zu umgehen, ist in der Telekommunikationseinrichtung ein Prisma derart integriert, dass zwei verschiedene Einstrahlrichtungen entstehen, so dass ohne Schwenken der Telekommunikationseinrichtung eine Bildaufnahme von in Bezug auf die Telekommunikationseinrichtung in unterschiedlichen Positionen angeordneten Gegenständen möglich ist.

Das Prisma wird dabei vorzugsweise direkt über der Blende der eingesetzten Kamera installiert. Das Prisma bewirkt eine Strahlteilung, so dass Gegenstände aus zwei um 180° verdrehten Aufnahmerichtungen bzw. Einstrahlrichtungen erfasst werden können. In einer bevorzugten Ausführungsform wird nun, um eine Bildüberlagerung zu vermeiden, durch elektrisches Ansteuern der entsprechenden LCD-Lichtventile eine gewünschte Aufnahmerichtung bzw. Einstrahlrichtung freigegeben.

Jeweils ein LCD-Lichtventile ist dann bei entsprechender Ansteuerung lichtdurchlässig bzw. lichtundurchlässig.

Ein Vorteil der vorliegenden Erfindung liegt darin, mittels der Telekommunikationseinrichtung, insbesondere eines Mobilfunkgerätes, sehr einfach optische Abbildungen von Gegenständen zu machen. Gerade im Falle eines Mobilfunkgerätes ist diese Doppelfunktion des Gerätes sehr praktisch. Der Benutzer des Mobilfunkgerätes hat somit nur ein Gerät zu betätigen und vor allem nur ein Gerät mitzuführen. Zum eine weist die erfindungsgemäße Telekommunikationseinrichtung mit Doppelfunktion in der Freizeit eine sehr hohe Praktikabilität auf, denn in der Freizeit möchte man meist sowohl erreichbar sein als auch Aufnahmen der Umgebung machen können.

Zum anderen ist diese Doppelfunktion aber auch im Alltag von großem Nutzen. Als Beispiel sei hier aufgeführt ein beobachteter oder selbst erlebter Autounfall. Man kann ohne Probleme vor Ort die Polizei und eventuell den Notarzt verständigen und gleichzeitig auch Aufnahmen von der Unfallstelle machen, die später zu Beweiszwecken sowohl bei der Polizei wie auch bei entsprechenden Versicherungen benötigt werden. Das Gleiche gilt bei eventuellen Einbrüchen, Überfällen oder sonst beobachteten Delikten, zu deren Aufklärung Beweismaterial in Form von Fotoaufnahmen relevant sein könnte.

Bei der Realisierung dieser Doppelfunktion wird in einer Ausführungsform auch vorgesehen, dass der Benutzer stets die aufgenommenen Bilder auf einer Mattscheibe bzw. einem Display sieht. Vorzugsweise wird nur ein Kameramodul pro Telekommunikationseinrichtung eingesetzt. Da mit kann man erhebliche Kosten einsparen. Zum einen ist die Telekommunikations einrichtung dadurch wesentlich weniger reparaturanfällig, zum anderen auch weniger platzeinnehmend.

Ferner ist es möglich, mittels einer Ausführungsform der Telekommunikationseinrichtung eine Bildübermittlung an entsprechende Empfangsvorrichtungen vorzunehmen.

Um einen Bildüberlagerung zu vermeiden kann erfindungsgemäß durch je ein LCD-Lichtventil jeweils die zu aktivierende Aufnahmerichtung bzw. Einstrahlrichtung freigegeben werden.

Mit der erfindungsgemäßen Einrichtung ist es möglich, eine mechanisch stabile Integration einer Kamera in eine Telekommunikationseinrichtung, insbesondere in ein Mobilfunkgerät, zu verwirklichen. Die vorliegende Erfindung weist zudem wenige bewegliche Komponenten auf, wodurch eine nur sehr geringe Reparaturanfälligkeit besteht. Ferner ist eine sehr kleine Bauweise möglich, was das Gesamtgerät sehr praktisch und handlich macht.

Weitere Vorteile der vorliegenden Erfindung werden in dem nachfolgenden Ausführungsbeispiel aufgezeigt. Es zeigt:

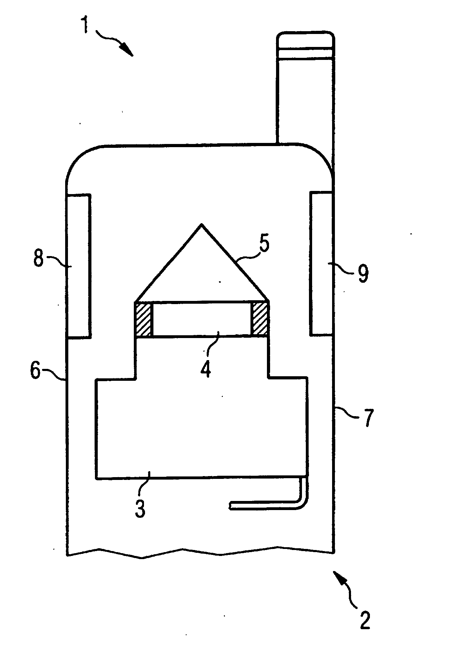

Figur 1 eine Seitenansicht eines erfindungsgemäßen Mobilfunkgerätes.

Das Gehäuse 2 des Mobilfunkgerätes 1 weist ein in ihm integriertes Kameramodul 3 mit einer Blende 4 auf. Direkt oberhalb der Blende 4 befindet sich ein Prisma 5. Auf der Frontseite 6 und auf der der Frontseite 6 gegenüberliegenden Rückseite 7 des Mobilfunkgerätes 1 befindet sich je ein LCD-Lichtventil 8 bzw. 9.

Das Prisma 5 direkt oberhalb der Blende 4 bewirkt eine Strahlteilung, so dass sowohl durch die Rückseite 7 als auch durch die Frontseite 6 Bilder aufgenommen bzw. auf dem vorgesehenen, hier nicht dargestellten, Display dargestellt werden können. Mittels der jeweils vorgesehenen LCD-Lichtventile 8 und 9 kann nun gesteuert werden, welche Aufnahmerichtung bzw. Einstrahlrichtung "aktiviert" werden soll. Durch elektrisches Ansteuern der LCD-Pannels kann bestimmt werden, welche Seite der. Frontseite 6 und der Rückseite 7 lichtdurchlässig ist und welche lichtundurchlässig ist.

## Patentansprüche

1. Mobile Telekommunikationseinrichtung, insbesondere Mobilfunkgerät (1), die eine Kamera (3,4) aufweist,
**dadurch gekennzeichnet ,**
**dass** vor der Kamera ein Prisma, (5) derart angeordnet ist, däss der von der Kamera ausgehende Strahlengang mittels des Prismas in zwei um 180° verdrehte Richtungen umgelenkt wird, und dass in jedem der umgelenkten Strahlengänge eine Vorrichtung (8, 9) zur Unterbrechung des Strahlengangs vorgesehen ist.

2. Mobile Telekommunikationseinrichtung nach Anspruch 1,
**dadurch gekennzeichnet,**
**dass** die genannte Vorrichtung zur Unterbrechung des Strahlengangs ein durchlässig und undurchlässig steuerbares LCD-Lichtventil (8, 9) ist.

3. Mobile Telekommunikationseinrichtung nach vorhergehenden Anspruch 2,
**dadurch gekennzeichnet, dass** sie Mittel zum elektrischen Ansteuern der LCD-Lichtventile (8, 9) zum Freigeben eines gewünschten der beiden Strahlengänge umfaßt.

## Claims

1. Mobile telecommunications equipment, especially mobile radio device (1), which features a camera (3, 4),
**characterized in that**
a prism (5) is arranged in front of the camera in such as way that the beams coming out of the camera are diverted by the camera in two 180° opposing directions and in each of the diverted beams there is a device provided for interrupting the beam.

2. Mobile telecommunications equipment in accordance with Claim 1,
**characterized in that**
said device for interrupting the beams is an LCD valve (8, 9) that can be made transparent or non-transparent.

3. Mobile telecommunications equipment in accordance with Claim 2
**characterized in that**
it comprises means for electrical control of the LCD light valves (8, 9), for enabling one of the two desired beam paths.

## Revendications

1. Dispositif de télécommunication mobile, en particulier appareil radio mobile (1), comprenant une caméra (3, 4),
**caractérisé en ce**
**qu'**un prisme (5) est placé devant la caméra de manière telle que la trajectoire des rayons partant de la caméra est déviée au moyen du prisme dans deux directions tournées de 180° et en ce qu'est prévu, dans chacune des trajectoires des rayons déviées, un dispositif (8, 9) d'interruption de la trajectoire des rayons.

2. Dispositif de télécommunication mobile selon la revendication 1,
**caractérisé en ce**
**que** ledit dispositif d'interruption de la trajectoire des rayons est une valve de lumière LCD (8, 9) commandable pour être perméable ou imperméable.

3. Dispositif de télécommunication mobile selon la revendication 2 précédente,
**caractérisé en ce**
**qu'**il comprend des moyens de commande électrique desvalves de lumière LCD (8, 9) pour débloquer l'une des deux trajectoires des rayons désirée.
